# EUROPEAN PATENT SPECIFICATION

(11) **EP 3 443 208 B1**
(45) Date of publication and mention of the grant of the patent: **04.01.2023**
(21) Application number: 16717808.6
(22) Date of filing: 13.04.2016
(51) Int. Cl.: F01N 3/20, F01N 13/00, F01N 3/10, F01N 3/28, F01N 3/08, F01N 3/035

(54) **EXHAUST SYSTEM FOR A DIESEL ENGINE**
ABGASSYSTEM FÜR EINEN DIESELMOTOR
SYSTÈME DE PURIFICATION POUR UN MOTEUR DIESEL

(43) Date of publication of application: 20.02.2019
(73) Proprietor: Johnson Matthey Public Limited Company, London EC4A 4AB (GB)
(72) Inventor: NASERI, Mojghan, Audubon, Pennsylvania 19403 (US); AYDIN, Ceren, Audubon, Pennsylvania 19403 (US); MULLA, Shadab, Audubon, Pennsylvania 19403 (US); CONWAY, Raymond, Audubon, Pennsylvania 19403 (US)
(74) Representative: Wilson, Nicola Ann
(86) International application number: PCT/US2016/027214
(87) International publication number: WO 2017/180114

(56) References cited:
- EP-A1- 2 133 527
- EP-A2- 1 458 960
- EP-A2- 1 458 960
- EP-A2- 2 882 523
- EP-A2- 2 882 523
- WO-A1-2005/073528
- DE-A1-102010 041 094
- US-A1- 2012 023 909
- US-A1- 2014 223 902
- US-A1- 2014 223 902
- OKUMURA K ET AL: "Pd loaded on high silica beta support active for the total oxidation of diluted methane in the presence of water vapor", CATALYSIS TODAY, ELSEVIER, AMSTERDAM, NL, vol. 117, no. 4, 15 October 2006 (2006-10-15), pages 577-583, XP027976280, ISSN: 0920-5861 [retrieved on 2006-10-15]

## Description

### FIELD OF THE INVENTION

The invention relates to an exhaust system for a diesel engine. There is described herein a vehicle comprising the exhaust system anda method of treating an exhaust gas produced by a diesel engine.

### BACKGROUND TO THE INVENTION

Diesel engines produce an exhaust emission that generally contains at least four classes of pollutant that are legislated against by inter-governmental organisations throughout the world: carbon monoxide (CO), unburned hydrocarbons (HCs), oxides of nitrogen (NOₓ) and particulate matter (PM). A variety of emissions control devices exist for treating one or more of each type of pollutant. These emissions control devices are often combined as part of an exhaust system to ensure that all four classes of pollutant are treated before emission of the exhaust gas into the environment.

Diesel engines, particularly heavy duty (HD) diesel engines, are being designed to have improved fuel economy. As a consequence of these designs, the diesel engines output higher levels of oxides of nitrogen (NOₓ) and the exhaust systems for such engines are required to provide increasingly higher NOₓ conversion to meet emission regulations.

Selective catalytic reduction (SCR) has been demonstrated to be an effective solution for meeting NOₓ emission requirements and regulations for diesel engines, particularly HD diesel engines. With increasing demand for improved fuel economy, improving the NOₓ emission reduction of the SCR system would allow for higher engine out NOₓ emissions. However, such requirements are challenging for current exhaust system designs, which typically consist of a diesel oxidation catalyst (DOC), a catalyzed soot filter (CSF) and an SCR catalyst.

One approach is to replace the CSF with a diesel particulate filter (DPF) coated with an SCR catalytic composition while keeping the flow-through SCR catalyst downstream. An example of such an exhaust system is described in SAE 2014-01-1525. Selective catalytic reduction catalysts on a filter substrate have been shown to have high NOₓ conversion capabilities (see SAE 2008-01-0072, SAE 2011-01-1312 and SAE 2012-01-0843).

It is also desirable to minimise the amount of nitrous oxide (N₂O) in exhaust gas emissions. The US Environmental Protection Agency has stated that the impact of 1 pound of nitrous oxide (N₂O) in warming the atmosphere is over 300 times that of 1 pound of carbon dioxide (CO₂). Nitrous oxide (N₂O) is also an ozone-depleting substance (ODS). It has been estimated that nitrous oxide (N₂O) molecules stay in the atmosphere for about 120 years before being removed or destroyed. Current legislation for regulating engine emissions does not limit nitrous oxide (N₂O) because it is regulated separately as a greenhouse gas (GHG).

"Pd loaded on high silica beta support active for the total oxidation of diluted methane in the presence of water vapour", Okumura K et al., Catalysis Today Vol. 117 no. 4 15 October 2006, pages 577-583 discloses palladium exchanged molecular sieves.

US2014/223902 discloses an internal combustion engine comprising a turbocharger wherein a bypass line in an exhaust gas discharge system delivers an aqueous urea reductant to an at least one SCR catalyst.

EP1458960 discloses a method of selectively catalysing the reduction of NOx in an exhaust gas.

EP2882523 discloses oxidation catalyst composites.

US2012/023909 discloses layered emission control devices.

### SUMMARY OF THE INVENTION

The invention relates to an exhaust system that is able to provide very high NOₓ conversion, particularly at low temperature (e.g. at "cold start" - when a diesel engine is started from cold). The exhaust system may also minimise the amount of N₂O that is generated as a by-product during NOₓ reduction.

The invention provides an exhaust system as defined in claim 1 appended hereto.

The inventors have found that excellent NOₓ conversion can be obtained using the exhaust system of the invention. It has been found that the NOₓ conversion provided by the exhaust system can be further improved by (a) dosing NH₃ gas, especially at low temperatures, directly upstream of the first selective catalytic reduction catalyst and/or (b) heating the exhaust gas from the emissions control device for oxidising carbon monoxide (CO) and/or hydrocarbons (HCs), especially when the exhaust gas temperature is relatively low. The exhaust systems of the invention can provide >95% NOₓ conversion under transient FTP test cycles, which will allow diesel engines to meet future emission regulations and fuel economy targets.

A vehicle may comprise a diesel engine and an exhaust system in accordance with the invention.

### BRIEF DESCRIPTION OF THE DRAWINGS

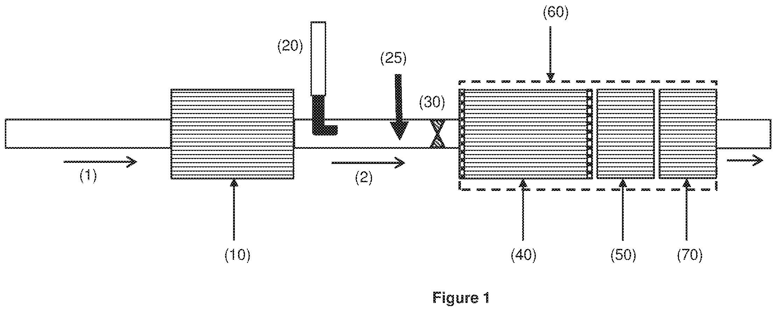

Figures 1 to 5 are schematic illustrations of aspects of an exhaust system. Figures 1 and 2-5 are in accordance with the invention.
Figure 1 shows an exhaust system where an exhaust gas (1) outlet from a turbocharger of a diesel engine flows into an oxidation catalyst (10), which is a cold start concept (dCSC^{™}) catalyst. The exhaust gas (2) outlet from the oxidation catalyst flows through a conduit toward a first selective catalytic reduction catalyst, which is a selective catalytic reduction filter catalyst (40). A side flow NH₃ doser (20) is able to introduce gaseous NH₃ into the conduit. A conventional urea doser (25) is also located in the conduit. Both the side flow NH₃ doser (20) and the urea doser (25) are upstream of a mixer (30). The mixer is adjacent to the inlet face of the selective catalytic reduction filter catalyst (SCR-DPF) (40). A second selective catalytic reduction (SCR) catalyst (50). The SCR-DPF (40) and the SCR catalyst (50) are close-coupled and may be disposed within the same container (60). The exhaust gas from the outlet of the SCR catalyst (50) may then pass to an optional ammonia slip catalyst (70).

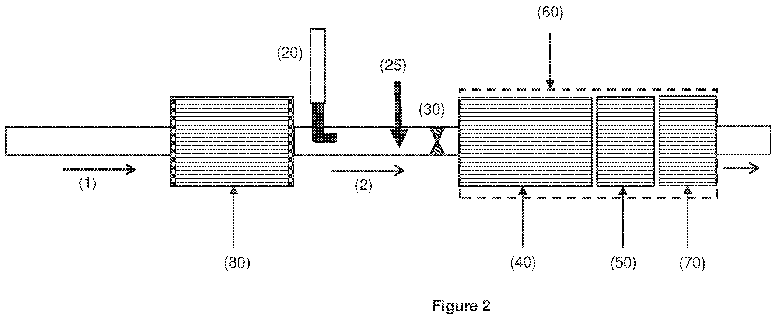

Figure 2 shows the same exhaust system as shown in Figure 1, except that the oxidation catalyst (10) in Figure 1 has been replaced by a catalysed soot filter (80). The first SCR catalyst has a flow-through substrate.

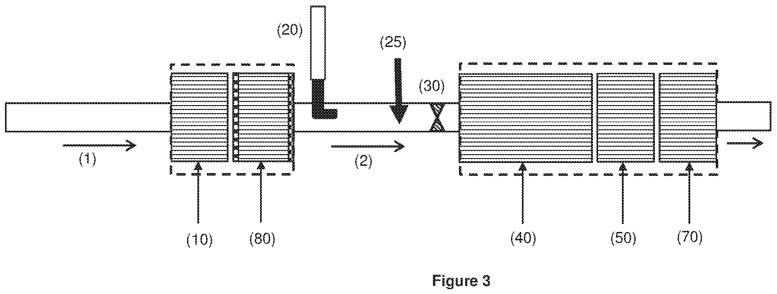

Figure 3 shows a similar exhaust system to the exhaust system in Figure 2, except that an oxidation catalyst (10) is present in addition to the catalysed soot filter (80). The oxidation catalyst is a cold start concept (dCSC^{™}) catalyst.

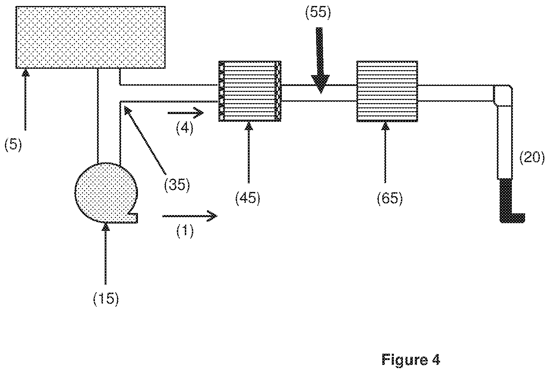

Figure 4 is a schematic diagram showing a side flow NH₃ doser arrangement. Exhaust gas from a diesel engine passes from an exhaust manifold (5) to a turbocharger (15) in the exhaust system. A by-pass (35) allows some of the exhaust gas (3) to pass into an arrangement for side flow NH₃ dosing. The arrangement may optionally contain a catalysed soot filter (45). The side flow NH₃ doser (20) contains a conventional urea doser (55) and a urea hydrolysis catalyst (65) for producing NH₃, which can be introduced into the main exhaust gas stream (1) from the turbocharger (15).

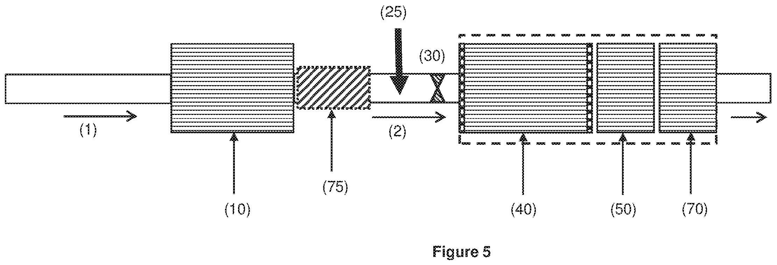

Figure 5 shows a similar exhaust system to the exhaust system shown in Figure 1. The oxidation catalyst (10) is a cold start concept (dCSC^{™}) catalyst. In addition or as an alternative to the side flow NH₃ doser (20), the exhaust system can contain an electrical heater (75), which can be used to the heat the exhaust gas that is outlet from the oxidation catalyst (10).

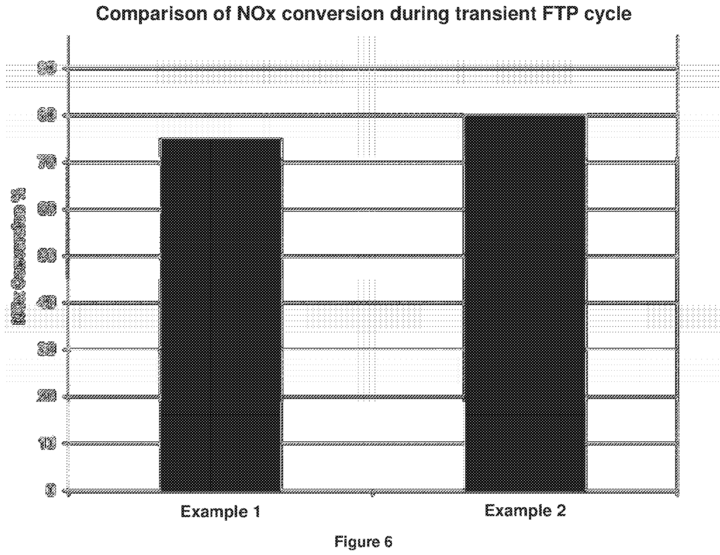

Figure 6 is a histogram showing the % NOx conversion for Examples 1 and 2 in a heavy duty transient FTP cycle.

### DETAILED DESCRIPTION OF THE INVENTION

The present invention will now be further described. The following sections relate to different parts of the exhaust system and define each part in more detail, and also to the vehicle and method of the invention. Each part or aspect of invention so defined may be combined with any other part or aspect of the invention unless clearly indicated to the contrary. In particular, any feature indicated as being preferred or advantageous may be combined with any other feature or features indicated as being preferred or advantageous.

### Emissions control device for oxidising carbon monoxide (CO) and/or hydrocarbons (HCs)

The emissions control device is suitable for oxidising carbon monoxide (CO) and/or hydrocarbons (HCs), preferably CO and HCs. The emissions control device may be further suitable for oxidising nitric oxide (NO) to nitrogen dioxide (NO₂).

The emissions control device for oxidising carbon monoxide (CO) and/or hydrocarbons (HCs) may be selected from the group consisting of:
(i) a cold start concept (dCSC^{™}) catalyst; and
(ii) a cold start concept (dCSC^{™}) catalyst and a catalysed soot filter (CSF).

When the emissions control device is a cold start concept (dCSC^{™}) catalyst and a catalysed soot filter (CSF), then preferably the cold start concept catalyst is upstream, preferably directly upstream, of the CSF. Thus, an outlet of the cold start concept catalyst is coupled (e.g. fluidly coupled by an exhaust gas conduit) to an inlet of the CSF.

When the emissions control device is a cold start concept (dCSC^{™}) catalyst and a catalysed soot filter (CSF), then preferably the DOC and the CSF or the cold start concept catalyst and the CSF are close-coupled. This means that the distance between the outlet end of the diesel oxidation catalyst or the cold start concept catalyst and the inlet end of the catalysed soot filter is from 1.0 mm to 300 mm, preferably 3 mm to 200 mm, more preferably 5 mm to 150 mm (e.g. 8 mm to 100 mm), such as 10 mm to 80 mm (e.g. 12 mm to 70 mm), and even more preferably 15 mm to 50 mm. This is advantageous for thermal transfer and for space saving.

When the emissions control device is a cold start concept (dCSC^{™}) catalyst having a filtering substrate, or a cold start concept (dCSC^{™}) catalyst and a catalysed soot filter (CSF), then preferably the first selective catalytic reduction catalyst has a flow-through substrate.

When the emissions control device is a cold start concept (dCSC^{™}) catalyst having a flow through substrate, then preferably the first selective catalytic reduction catalyst has a filtering substrate (i.e. the first SCR catalyst is a SCR-DPF).

Generally, it is preferable that the exhaust system of the invention comprises a single filtering substrate.

In general, the inlet of the emissions control device is coupled (e.g. fluidly coupled), preferably directly fluidly coupled to a turbocharger. Thus, the main exhaust gas stream pass from the diesel engine through a turbocharged to the emissions control device.

Typically, the catalysed soot filter (CSF) comprises a catalytic composition disposed or supported on a substrate. The catalytic composition comprises the platinum group metal (PGM) selected from platinum (Pt), palladium (Pd) and a combination thereof.

When the emissions control device includes a catalysed soot filter, then the or each catalytic composition may independently further comprise at least one support material. The or each support material may independently comprise, or consist essentially of, a refractory oxide.

Typically, the or each refractory oxide is independently selected from the group consisting of alumina, silica, titania, zirconia, ceria and a mixed or composite oxide thereof, such as a mixed oxide or a composite oxide of two or more thereof. For example, the refractory oxide may be selected from the group consisting of alumina, silica, titania, zirconia, ceria, silica-alumina, titania-alumina, zirconia-alumina, ceria-alumina, titania-silica, zirconia-silica, zirconia-titania, ceria-zirconia and alumina-magnesium oxide. It is preferred that the or each refractory oxide is independently selected from the group consisting of alumina, silica, silica-alumina, ceria-alumina and ceria-zirconia. More preferably, the or each refractory oxide is independently selected from the group consisting of alumina and silica-alumina.

Each platinum group metal (PGM) is typically disposed or supported on a support material. The PGM may be disposed directly onto or is directly supported by the support material. For example, platinum and/or palladium can be dispersed on the support material.

When the emissions control device includes a catalysed soot filter, then the platinum group metal (PGM) of each catalytic composition is preferably selected from platinum (Pt) and a combination of platinum (Pt) and palladium (Pd). It is preferred that the platinum group metal (PGM) of each catalytic composition is a combination of platinum (Pt) and palladium (Pd).

When the platinum group metal (PGM) is a combination of platinum (Pt) and palladium (Pd), then there may be individual particles of platinum and palladium, which may be separated or mixed, or the platinum and palladium may be in the form of an alloy, preferably a bimetallic alloy.

The catalysed soot filter may have a total loading of platinum group metal of from 0.5 to 10 g ft⁻³, preferably 1 to 7.5 g ft⁻³, and more preferably 4 to 6 g ft⁻³.

The catalysed soot filter may comprise a ratio of the total mass of platinum to the total mass of the palladium of 5:1 to 1:5 (e.g. 3:1 to 1:3), such as 2:1 to 1:2. It is preferred that the total mass of platinum is greater than the total mass of palladium. Preferably, the ratio of the total mass of platinum to the total mass of palladium is 5:1 to 1.1:1 (e.g. 4:1 to 7:6), such as 3:1 to 1.25:1 (e.g. 2.5:1 to 1.25:1).

The catalysed soot filter may comprise a total amount of the support material of 0.1 to 4.5 g in⁻³ (e.g. 0.25 to 4.0 g in⁻³), preferably 0.5 to 3.0 g in⁻³, more preferably 0.6 to 2.5 g in⁻³ (e.g. 0.75 to 1.5 g in⁻³).

An advantage of including a catalysed soot filter (CSF) in the exhaust system is that the CSF removes soot (i.e. particulate matter). The CSF may be solely responsible for soot removal (e.g. when the first SCR catalyst has a flow-through substrate) or may contribute to the overall soot removal of the exhaust system (e.g. when the first SCR catalyst is a SCR-DPF).

The emissions control device comprises a cold start concept (dCSC^{™}) catalyst (either alone or with a catalysed soot filter (CSF)). In comparison to DOCs and CSFs, a cold start concept catalyst (referred to herein below as a "cold start catalyst") is able to store NOₓ at relatively low temperatures with a high storage efficiency. A cold start catalyst releases NOₓ when it reaches a certain temperature (unlike lean NOₓ traps (LNTs) or NOₓ storage catalysts (NSCs), which release NOₓ when the composition of the exhaust gas becomes "rich").

An advantage of cold start catalysts is that they are able to store NOₓ when the temperature of the exhaust system is relatively low, such that the first selective catalytic reduction catalyst and the second selective catalytic reduction catalyst have not reached their effective operating temperatures for reducing NOₓ. The NOₓ release temperature of the cold start catalyst may be greater than or equal to the effective operating temperature of the first selective catalytic reduction catalyst and/or the second selective catalytic reduction catalyst. This means that the cold start catalyst can release NOₓ when the exhaust system has reached a temperature at which the first selective catalytic reduction catalyst and/or the second selective catalytic reduction catalyst can effectively reduce NOₓ.

The cold start catalyst comprises a catalytic material supported on a substrate. The catalytic material comprises, or may consist essentially of, a molecular sieve catalyst. The molecular sieve catalyst comprises, or consists essentially of, a noble metal and a molecular sieve. The molecular sieve catalyst comprises a noble metal-exchanged molecular sieve, wherein the noble metal comprises palladium and wherein the molecular sieve is a small pore molecular sieve having a framework structure represented by a Framework Type Code (FTC) represented by AEI or CHA.The molecular sieve catalyst can be prepared according to the method described in WO 2012/166868.

In general, the molecular sieve catalyst comprises, or consists essentially of, a noble metal-exchanged molecular sieve.

The noble metal is typically selected from the group consisting of palladium (Pd), platinum (Pt), rhodium (Rh) and mixtures of two or more thereof, but must comprise Palladium.

Generally, it is preferred that the noble metal comprises, or consists of, palladium (Pd) and optionally a second metal selected from the group consisting of platinum (Pt) and rhodium (Rh). Even more preferably, the noble metal comprises, or consists of, palladium (Pd) and optionally platinum (Pt). More preferably, the molecular sieve catalyst comprises palladium as the only noble metal.

When the noble metal comprises, or consists of, palladium (Pd) and a second metal, then the ratio by mass of palladium (Pd) to the second metal is > 1:1. More preferably, the ratio by mass of palladium (Pd) to the second metal is > 1:1 and the molar ratio of palladium (Pd) to the second metal is > 1:1.

The molecular sieve catalyst may further comprise a base metal. Thus, the molecular sieve catalyst may comprise, or consist essentially of, a noble metal, a molecular sieve and optionally a base metal. The molecular sieve catalyst may comprise, or consist essentially of, a noble metal- and base metal-exchanged molecular sieve.

The base metal may be selected from the group consisting of iron (Fe), copper (Cu), manganese (Mn), chromium (Cr), cobalt (Co), nickel (Ni), zinc (Zn) and tin (Sn), as well as mixtures of two or more thereof. It is preferred that the base metal is selected from the group consisting of iron, copper and cobalt, more preferably iron and copper. Even more preferably, the base metal is iron.

Alternatively, the molecular sieve catalyst may be substantially free of a base metal, such as a base metal selected from the group consisting of iron (Fe), copper (Cu), manganese (Mn), chromium (Cr), cobalt (Co), nickel (Ni), zinc (Zn) and tin (Sn), as well as mixtures of two or more thereof. Thus, the molecular sieve catalyst may not comprise a base metal.

In general, it is preferred that the molecular sieve catalyst does not comprise a base metal.

The molecular sieve is typically composed of aluminium, silicon, and/or phosphorus. The molecular sieve generally has a three-dimensional arrangement (e.g. framework) of SiO₄, AlO₄, and/or PO₄ that are joined by the sharing of oxygen atoms. The molecular sieve may have an anionic framework. The charge of the anionic framework may be counterbalanced by cations, such as by cations of alkali and/or alkaline earth elements (e.g., Na, K, Mg, Ca, Sr, and Ba), ammonium cations and/or protons.

Typically, the molecular sieve has an aluminosilicate framework, an aluminophosphate framework or a silico-aluminophosphate framework. The molecular sieve may have an aluminosilicate framework or an aluminophosphate framework. It is preferred that the molecular sieve has an aluminosilicate framework or a silico-aluminophosphate framework. More preferably, the molecular sieve has an aluminosilicate framework.

When the molecular sieve has an aluminosilicate framework, then the molecular sieve is preferably a zeolite.

In general, the molecular sieve may be a noble metal-exchanged molecular sieve (e.g. noble metal-exchanged molecular sieve having an aluminosilicate or an aluminophosphate framework). The noble metal may be present on an extra-framework site on the external surface of the molecular sieve or within a channel, cavity or cage of the molecular sieve.

The molecular sieve catalyst generally has at least 1 % by weight (i.e. of the amount of noble metal of the molecular sieve catalyst) of the noble metal (e.g. by exchange, such as located inside pores of the molecular sieve), preferably at least 5 % by weight, more preferably at least 10 % by weight, such as at least 25 % by weight, even more preferably at least 50 % by weight.

The molecular sieve is a small pore molecular sieve (i.e. a molecular sieve having a maximum ring size of eight tetrahedral atoms)

The small pore molecular sieve has a framework structure represented by a Framework Type Code (FTC) selected from the group consisting of AEI or CHA, preferably AEI.

Preferably, the small pore molecular sieve has an aluminosilicate framework or a silico-aluminophosphate framework. More preferably, the small pore molecular sieve has an aluminosilicate framework (i.e. the molecular sieve is a zeolite), especially when the small pore molecular sieve has a framework structure represented by a FTC that is AEI, CHA or an AEI-CHA intergrowth, particularly AEI or CHA.

Each of the aforementioned three-letter codes represents a framework type in accordance with the "IUPAC Commission on Zeolite Nomenclature" and/or the "Structure Commission of the International Zeolite Association".

The molecular sieve typically has a silica to alumina molar ratio (SAR) of 10 to 200 (e.g. 10 to 40), such as 10 to 100, more preferably 15 to 80 (e.g. 15 to 30). The SAR generally relates to a molecular having an aluminosilicate framework (e.g. a zeolite) or a silico-aluminophosphate framework, preferably an aluminosilicate framework (e.g. a zeolite).

The molecular sieve catalyst may have an infrared spectrum having a characteristic absorption peak in a range of from 750 cm⁻¹ to 1050 cm⁻¹ (in addition to the absorption peaks for the molecular sieve itself). Preferably, the characteristic absorption peak is in the range of from 800 cm⁻¹ to 1000 cm⁻¹, more preferably in the range of from 850 cm⁻¹ to 975 cm⁻¹.

Generally, the cold start catalyst comprises a total loading of noble metal (i.e. of the molecular sieve catalyst, particularly in the first region) of ≥ 1 g ft⁻³, preferably > 1 g ft⁻³, and more preferably > 2 g ft⁻³.

The cold start catalyst typically comprises a total loading of noble metal (i.e. of the molecular sieve catalyst) of 1 to 250 g ft⁻³, preferably 5 to 150 g ft⁻³, more preferably 10 to 100 g ft⁻³.

Generally, the or each substrate (i.e. of the emissions control device) is a monolith (also referred to herein as a substrate monolith). Such monoliths are well-known in the art.

The substrate, particularly the substrate monolith, preferably has a diameter of ≥ 7 inches (e.g. ≥ 17.8 cm). Such substrate monoliths tend to be used in heavy duty diesel applications.

A catalysed soot filter comprises a substrate, which is a filtering substrate (e.g. a filtering monolith). A cold start catalyst comprises a substrate, which is a flow-through substrate (e.g. a flow-through monolith) or a filtering substrate (e.g. a filtering monolith). It is preferred that the cold start catalyst comprises a substrate that is a flow-through substrate.

A flow-through monolith typically comprises a honeycomb monolith (e.g. a metal or ceramic honeycomb monolith) having a plurality of channels extending therethrough, which channels are open at both ends.

The filtering monolith may be a wall flow filter substrate monolith. A wall flow filter substrate monolith generally comprises a plurality of inlet channels and a plurality of outlet channels, wherein the inlet channels are open at an upstream end (i.e. exhaust gas inlet side) and are plugged or sealed at a downstream end (i.e. exhaust gas outlet side), the outlet channels are plugged or sealed at an upstream end and are open at a downstream end, and wherein each inlet channel is separated from an outlet channel by a wall (e.g. a wall having a porous structure).

In a wall-flow filter substrate monolith, each inlet channel is alternately separated from an outlet channel by a wall (e.g. of porous structure) and vice versa. It is preferred that the inlet channels and the outlet channels are arranged in a honeycomb arrangement. When there is a honeycomb arrangement, it is preferred that the channels vertically and laterally adjacent to an inlet channel are plugged at an upstream end and vice versa (i.e. the channels vertically and laterally adjacent to an outlet channel are plugged at a downstream end). When viewed from either end, the alternately plugged and open ends of the channels take on the appearance of a chessboard.

In general, the substrate may have a tubular, fibrous or particulate form. Examples of suitable supporting substrates include a substrate of the monolithic honeycomb cordierite type, a substrate of the monolithic honeycomb SiC type, a substrate of the layered fibre or knitted fabric type, a substrate of the foam type, a substrate of the crossflow type, a substrate of the metal wire mesh type, a substrate of the metal porous body type and a substrate of the ceramic particle type.

Typically, the catalysed soot filter and/or the cold start catalyst is substantially free of rhodium and/or is substantially free of a NOₓ storage component comprising, or consisting essentially of, an oxide, a carbonate or a hydroxide of an alkali metal, an alkaline earth metal and/or a rare earth metal. More preferably, the diesel oxidation catalyst and/or the catalysed soot filter and/or the cold start catalyst does not comprise rhodium and/or does not comprise a NOₓ storage component comprising, or consisting essentially of, an oxide, a carbonate or a hydroxide of an alkali metal, an alkaline earth metal and/or a rare earth metal.

It may preferable that the molecular sieve catalyst is substantially free of platinum. More preferably, the molecular sieve catalyst does not comprise platinum.

### Injector for introducing an ammonia precursor into the exhaust gas

The exhaust system of the invention comprises an injector for introducing an ammonia precursor into the exhaust gas. For the avoidance of doubt, the injector for introducing an ammonia precursor into the exhaust gas is not (e.g. it comprises different components to) the means for introducing gaseous ammonia into the exhaust gas as described below.

Typically, the injector is a liquid injector suitable for introducing a solution comprising an ammonia precursor into the exhaust gas.

The ammonia precursor is preferably urea or ammonium formate, more preferably urea. Urea dosing systems for SCR catalysts are known in the art.

In general, the injector atomizes the ammonia precursor, or a solution comprising the ammonia precursor, upon injection into the exhaust gas, such as by spraying the ammonia precursor or the solution comprising the ammonia precursor. The injector may be an airless injector or an air-assisted injector.

The injector is configured to introduce an ammonia precursor into the exhaust gas upstream of the selective catalytic reduction filter catalyst. It is preferred that the injector is configured to controllably introduce an amount of ammonia precursor into the exhaust gas upstream of the selective catalytic reduction filter catalyst. More preferably, the injector is configured to controllably introduce an amount of ammonia precursor into the exhaust gas upstream of the selective catalytic reduction filter catalyst to provide a molar ammonia to NOₓ ratio (ANR) of from 0.7 to 1.3 (e.g. 0.9 to 1.2), such as 1.0 to 1.2 (e.g. about 1:1).

The injector for introducing an ammonia precursor into the exhaust gas is (e.g. located) downstream of, preferably downstream of the outlet of, the emissions control device for oxidising carbon monoxide (CO) and/or hydrocarbons (HCs). When the emissions control device is a cold start concept (dCSC^{™}) catalyst and a catalysed soot filter (CSF), then preferably the injector is (e.g. located) downstream of the outlet of the CSF.

Typically, the emissions control device for oxidising carbon monoxide (CO) and/or hydrocarbons (HCs) has an outlet coupled, preferably fluidly coupled by an exhaust gas conduit, to an inlet of the selective catalytic reduction filter catalyst. The injector for introducing an ammonia precursor into the exhaust gas is preferably located between the outlet of the emissions control device and the inlet of the first selective catalytic reduction catalyst. The injector is preferably connected to an exhaust gas conduit between the outlet of the emissions control device and the inlet of the first selective catalytic reduction catalyst.

The injector for introducing an ammonia precursor into the exhaust gas is typically coupled, preferably fluidly coupled, to an ammonia precursor storage tank. Thus, the exhaust system of the invention may further comprise an ammonia precursor storage tank.

The injector for introducing an ammonia precursor into the exhaust gas may be electrically coupled to an engine management system. The engine management system may be configured to trigger the injector to inject ammonia precursor into the exhaust gas when the temperature of the exhaust gas is ≥ T₁, wherein T₁ is 200 °C, preferably 215 °C, more preferably 230 °C. It is particularly preferred that the engine management system is configured to trigger the injector to inject ammonia precursor into the exhaust gas when the temperature of the exhaust gas is ≥ T₁ and when the molar ANR of the exhaust gas is < 0.7, preferably < 0.9.

The engine management system and/or the injector for introducing an ammonia precursor into the exhaust gas may be electrically coupled to a temperature sensor (e.g. a thermocouple) located upstream, preferably directly upstream, of the selective catalytic reduction filter catalyst. The temperature sensor is located downstream of the emissions control device for oxidising carbon monoxide (CO) and/or hydrocarbons (HCs). The temperature sensor is suitable for determining T₁.

Additionally or alternatively, the engine management system and/or the injector for introducing an ammonia precursor into the exhaust gas may be electrically coupled to a NOₓ sensor located upstream, preferably directly upstream, of the first selective catalytic reduction catalyst. The NOₓ sensor is preferably located downstream of the injector for introducing an ammonia precursor into the exhaust gas.

The exhaust system may further comprise a mixer, wherein the mixer is (e.g. located, such as in the exhaust gas conduit) upstream of the first selective catalytic reduction catalyst and downstream of the injector for introducing an ammonia precursor into the exhaust gas.

### First selective catalytic reduction (SCR) catalyst

The exhaust system of the invention comprises a first selective catalytic reduction catalyst. The first SCR catalyst is (e.g. located) downstream of the injector for introducing an ammonia precursor into the exhaust gas. The first SCR catalyst is upstream of the second selective catalytic reduction (SCR) catalyst.

The first SCR catalyst comprises a substrate and a first SCR catalyst composition. The substrate may be a flow-through substrate or a filtering substrate. The term "first" in the expression "first selective catalytic reduction composition" is used to delineate the composition from other selective catalytic reduction compositions that are present in the exhaust system.

When the first SCR catalyst has a flow-through substrate, then the substrate may comprise the first SCR catalyst composition (i.e. the first SCR catalyst is obtained by extrusion) or the first SCR catalyst composition may be disposed or supported on the substrate (i.e. the first SCR catalyst composition is applied onto the substrate by a washcoating method). It is preferred that first SCR catalyst composition is disposed or supported on the substrate.

In general, it is preferred that the first SCR catalyst has a filtering substrate. When the first SCR catalyst has a filtering substrate, then it is a selective catalytic reduction filter catalyst, which is referred to herein by the abbreviation "SCR-DPF". The SCR-DPF comprises a filtering substrate and the first selective catalytic reduction (SCR) composition.

The first selective catalytic reduction composition may comprise, or consist essentially of, a metal oxide based SCR catalyst formulation, a molecular sieve based SCR catalyst formulation or mixture thereof. Such SCR catalyst formulations are known in the art.

The first selective catalytic reduction composition may comprise, or consist essentially of, a metal oxide based SCR catalyst formulation. The metal oxide based SCR catalyst formulation comprises vanadium or tungsten or a mixture thereof supported on a refractory oxide. The refractory oxide may be selected from the group consisting of alumina, silica, titania, zirconia, ceria and combinations thereof.

It may be preferable that the metal oxide based SCR catalyst formulation comprises, or consists essentially of, an oxide of vanadium (e.g. V₂O₅) and/or an oxide of tungsten (e.g. WO₃) supported on a refractory oxide selected from the group consisting of titania (e.g. TiO₂), ceria (e.g. CeO₂), and a mixed or composite oxide of cerium and zirconium (e.g. CeₓZr₍₁₋ₓ₎O₂, wherein x = 0.1 to 0.9, preferably x = 0.2 to 0.5).

When the refractory oxide is titania (e.g. TiO₂), then preferably the concentration of the oxide of vanadium is from 0.5 to 6 wt.% (e.g. of the metal oxide based SCR formulation) and/or the concentration of the oxide of tungsten (e.g. WO₃) is from 5 to 20 wt.%. More preferably, the oxide of vanadium (e.g. V₂O₅) and the oxide of tungsten (e.g. WO₃) are supported on titania (e.g. TiO₂).

When the refractory oxide is ceria (e.g. CeO₂), then preferably the concentration of the oxide of vanadium is from 0.1 to 9 wt.% (e.g. of the metal oxide based SCR formulation) and/or the concentration of the oxide of tungsten (e.g. WO₃) is from 0.1 to 9 wt.%.

In general, it is preferred that the metal oxide based SCR catalyst formulation comprises, or consists essentially of, an oxide of vanadium (e.g. V₂O₅) and optionally an oxide of tungsten (e.g. WO₃), supported on titania (e.g. TiO₂). It has been found that metal oxide based SCR catalyst formulations produce significantly less N₂O as a by-product, especially when the metal oxide based SCR catalyst formulation is disposed upstream of a copper containing molecular sieve based SCR catalyst formulation.

The first selective catalytic reduction composition may comprise, or consist essentially of, a molecular sieve based SCR catalyst formulation. The molecular sieve based SCR catalyst formulation comprises a molecular sieve, which is optionally a transition metal exchanged molecular sieve. It is preferable that the SCR catalyst formulation comprises a transition metal exchanged molecular sieve.

In general, the molecular sieve based SCR catalyst formulation may comprise a molecular sieve having an aluminosilicate framework (e.g. zeolite), an aluminophosphate framework (e.g. AIPO), a silicoaluminophosphate framework (e.g. SAPO), a heteroatom-containing aluminosilicate framework, a heteroatom-containing aluminophosphate framework (e.g. MeAlPO, where Me is a metal), or a heteroatom-containing silicoaluminophosphate framework (e.g. MeAPSO, where Me is a metal). The heteroatom (i.e. in a heteroatom-containing framework) may be selected from the group consisting of boron (B), gallium (Ga), titanium (Ti), zirconium (Zr), zinc (Zn), iron (Fe), vanadium (V) and combinations of any two or more thereof. It is preferred that the heteroatom is a metal (e.g. each of the above heteroatom-containing frameworks may be a metal-containing framework).

It is preferable that the molecular sieve based SCR catalyst formulation comprises, or consist essentially of, a molecular sieve having an aluminosilicate framework (e.g. zeolite) or a silicoaluminophosphate framework (e.g. SAPO). More preferably, the molecular sieve has an aluminosilicate framework (e.g. zeolite).

When the molecular sieve has an aluminosilicate framework (e.g. the molecular sieve is a zeolite), then typically the molecular sieve has a silica to alumina molar ratio (SAR) of from 5 to 200 (e.g. 10 to 200), preferably 10 to 100 (e.g. 10 to 30 or 20 to 80), such as 12 to 40, more preferably 15 to 30.

Typically, the molecular sieve is microporous. A microporous molecular sieve has pores with a diameter of less than 2 nm (e.g. in accordance with the IUPAC definition of "microporous" [see Pure & Appl. Chem., 66(8), (1994), 1739-1758)]).

The molecular sieve based SCR catalyst formulation may comprise a small pore molecular sieve (e.g. a molecular sieve having a maximum ring size of eight tetrahedral atoms), a medium pore molecular sieve (e.g. a molecular sieve having a maximum ring size of ten tetrahedral atoms) or a large pore molecular sieve (e.g. a molecular sieve having a maximum ring size of twelve tetrahedral atoms) or a combination of two or more thereof.

When the molecular sieve is a small pore molecular sieve, then the small pore molecular sieve may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG and ZON, or a mixture and/or an intergrowth of two or more thereof. Preferably, the small pore molecular sieve has a framework structure represented by a FTC selected from the group consisting of CHA, LEV, AEI, AFX, ERI, SFW, KFI, DDR and ITE. More preferably, the small pore molecular sieve has a framework structure represented by a FTC selected from the group consisting of CHA and AEI. The small pore molecular sieve may have a framework structure represented by the FTC CHA. The small pore molecular sieve may have a framework structure represented by the FTC AEI. When the small pore molecular sieve is a zeolite and has a framework represented by the FTC CHA, then the zeolite may be chabazite.

When the molecular sieve is a medium pore molecular sieve, then the medium pore molecular sieve may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, -PAR, PCR, PON, PUN, RRO, RSN, SFF, SFG, STF, STI, STT, STW, -SVR, SZR, TER, TON, TUN, UOS, VSV, WEI and WEN, or a mixture and/or an intergrowth of two or more thereof. Preferably, the medium pore molecular sieve has a framework structure represented by a FTC selected from the group consisting of FER, MEL, MFI and STT. More preferably, the medium pore molecular sieve has a framework structure represented by a FTC selected from the group consisting of FER and MFI, particularly MFI. When the medium pore molecular sieve is a zeolite and has a framework represented by the FTC FER or MFI, then the zeolite may be ferrierite, silicalite or ZSM-5.

When the molecular sieve is a large pore molecular sieve, then the large pore molecular sieve may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, -RON, RWY, SAF, SAO, SBE, SBS, SBT, SEW, SFE, SFO, SFS, SFV, SOF, SOS, STO, SSF, SSY, USI, UWY and VET, or a mixture and/or an intergrowth of two or more thereof. Preferably, the large pore molecular sieve has a framework structure represented by a FTC selected from the group consisting of AFI, BEA, MAZ, MOR and OFF. More preferably, the large pore molecular sieve has a framework structure represented by a FTC selected from the group consisting of BEA, MOR and MFI. When the large pore molecular sieve is a zeolite and has a framework represented by the FTC BEA, FAU or MOR, then the zeolite may be a beta zeolite, faujasite, zeolite Y, zeolite X or mordenite.

In general, it is preferred that the molecular sieve is a small pore molecular sieve.

The molecular sieve based SCR catalyst formulation preferably comprises a transition metal exchanged molecular sieve. The transition metal may be selected from the group consisting of cobalt, copper, iron, manganese, nickel, palladium, platinum, ruthenium and rhenium. It is preferred that the transition metal is selected from the group consisting of copper and iron.

The transition metal may be iron. An advantage of SCR catalyst formulations containing an iron exchanged molecular sieve is that such formulations have excellent NOₓ reduction activity at a higher temperature than, for example, a copper exchanged molecular sieve. An iron exchanged molecular sieve may also generate a minimal amount of N₂O (compared to other types of SCR catalyst formulation).

The transition metal may be copper. An advantage of SCR catalyst formulations containing a copper exchanged molecular sieve is that such formulations have excellent low temperature NOₓ reduction activity (e.g. it may be superior to the low temperature NOₓ reduction activity of an iron exchanged molecular sieve).

The transition metal may be present on an extra-framework site on the external surface of the molecular sieve or within a channel, cavity or cage of the molecular sieve.

Typically, the transition metal exchanged molecular sieve comprises an amount of 0.10 to 10 % by weight of the transition metal exchanged molecular, preferably an amount of 0.2 to 5 % by weight.

In general, the first selective catalytic reduction catalyst comprises the first selective catalytic reduction composition in a total concentration of 0.5 to 4.0 g in⁻³, preferably 1.0 to 3.0 4.0 g in⁻³.

It may be preferable that the first SCR catalyst composition comprises a mixture of a metal oxide based SCR catalyst formulation and a molecular sieve based SCR catalyst formulation. It is preferred that the (a) metal oxide based SCR catalyst formulation comprises, or consists essentially of, an oxide of vanadium (e.g. V₂O₅) and optionally an oxide of tungsten (e.g. WO₃), supported on titania (e.g. TiO₂) and (b) the molecular sieve based SCR catalyst formulation comprises a transition metal exchanged molecular sieve. More preferably, the transition metal of the transition metal exchanged molecular sieve is iron. The zeolite preferably has a framework structure represented by MFI.

When the first SCR catalyst is an SCR-DPF, then the filtering substrate is preferably a wall flow filter substrate monolith, such as described above in relation to a catalysed soot filter.

The wall flow filter substrate monolith (e.g. of the SCR-DPF) typically has a cell density of 60 to 400 cells per square inch (cpsi). It is preferred that the wall flow filter substrate monolith has a cell density of 100 to 350 cpsi, more preferably 200 to 300 cpsi.

The wall flow filter substrate monolith may have a wall thickness (e.g. average internal wall thickness) of 0.20 to 0.50 mm, preferably 0.25 to 0.35 mm (e.g. about 0.30 mm).

Generally, the uncoated wall flow filter substrate monolith has a porosity of from 50 to 80 %, preferably 55 to 75 %, and more preferably 60 to 70 %.

The uncoated wall flow filter substrate monolith typically has a mean pore size of at least 5 µm. It is preferred that the mean pore size is from 10 to 40 µm, such as 15 to 35 µm, more preferably 20 to 30 µm.

The wall flow filter substrate may have a symmetric cell design or an asymmetric cell design.

In general for an SCR-DPF, the first selective catalytic reduction composition is disposed within the wall of the wall-flow filter substrate monolith. Additionally, the first selective catalytic reduction composition may be disposed on the walls of the inlet channels and/or on the walls of the outlet channels.

### Second selective catalytic reduction (SCR) catalyst

The exhaust system of the invention comprises a second selective catalytic reduction (SCR) catalyst. The second SCR catalyst is downstream, preferably directly downstream, of the first SCR catalyst. Thus, an outlet of the first SCR catalyst is typically coupled (e.g. fluidly coupled) to an inlet of the second SCR catalyst.

The first SCR catalyst and the second SCR catalyst may be close-coupled. The distance between the outlet of the first SCR catalyst and the second SCR catalyst may be 1.0 mm to 300 mm, preferably 3 mm to 200 mm, more preferably 5 mm to 150 mm (e.g. 8 mm to 100 mm), such as 10 mm to 80 mm (e.g. 12 mm to 70 mm), and even more preferably 15 mm to 50 mm. This is advantageous for thermal transfer and for space saving.

The second SCR catalyst comprises a flow-through substrate and a second selective catalytic reduction (SCR) composition. The term "second" in the expression "second selective catalytic reduction composition" is used to delineate the composition from other selective catalytic reduction compositions that are present in the exhaust system. It does not require that the second SCR catalyst has two or more selective catalytic reduction compositions.

The second selective catalytic reduction composition may comprise, or consist essentially of, a metal oxide based SCR catalyst formulation, a molecular sieve based SCR catalyst formulation or mixture thereof. The second selective catalytic reduction composition may be the same as or different to the first selective catalytic reduction composition.

The second selective catalytic reduction composition may comprise, or consist essentially of, a metal oxide based SCR catalyst formulation. The metal oxide based SCR catalyst formulation comprises vanadium or tungsten or a mixture thereof supported on a refractory oxide. The refractory oxide may be selected from the group consisting of alumina, silica, titania, zirconia, ceria and combinations thereof.

It may be preferable that the metal oxide based SCR catalyst formulation comprises, or consists essentially of, an oxide of vanadium (e.g. V₂O₅) and/or an oxide of tungsten (e.g. WO₃) supported on a refractory oxide selected from the group consisting of titania (e.g. TiO₂), ceria (e.g. CeO₂), and a mixed or composite oxide of cerium and zirconium (e.g. CeₓZr₍₁₋ₓ₎O₂, wherein x = 0.1 to 0.9, preferably x = 0.2 to 0.5).

When the refractory oxide is titania (e.g. TiO₂), then preferably the concentration of the oxide of vanadium is from 0.5 to 6 wt.% (e.g. of the metal oxide based SCR formulation) and/or the concentration of the oxide of tungsten (e.g. WO₃) is from 5 to 20 wt.%. More preferably, the oxide of vanadium (e.g. V₂O₅) and the oxide of tungsten (e.g. WO₃) are supported on titania (e.g. TiO₂).

When the refractory oxide is ceria (e.g. CeO₂), then preferably the concentration of the oxide of vanadium is from 0.1 to 9 wt.% (e.g. of the metal oxide based SCR formulation) and/or the concentration of the oxide of tungsten (e.g. WO₃) is from 0.1 to 9 wt.%.

In general, it is preferred that the metal oxide based SCR catalyst formulation comprises, or consists essentially of, an oxide of vanadium (e.g. V₂O₅) and optionally an oxide of tungsten (e.g. WO₃), supported on titania (e.g. TiO₂). It has been found that metal oxide based SCR catalyst formulations produce significantly less N₂O as a by-product.

The second selective catalytic reduction composition may comprise, or consist essentially of, a molecular sieve based SCR catalyst formulation. The molecular sieve based SCR catalyst formulation comprises a molecular sieve, which is optionally a transition metal exchanged molecular sieve. It is preferable that the SCR catalyst formulation comprises a transition metal exchanged molecular sieve.

in general, the molecular sieve based SCR catalyst formulation may comprise a molecular sieve having an aluminosilicate framework (e.g. zeolite), an aluminophosphate framework (e.g. AlPO), a silicoaluminophosphate framework (e.g. SAPO), a heteroatom-containing aluminosilicate framework, a heteroatom-containing aluminophosphate framework (e.g. MeAlPO, where Me is a metal), or a heteroatom-containing silicoaluminophosphate framework (e.g. MeAPSO, where Me is a metal). The heteroatom (i.e. in a heteroatom-containing framework) may be selected from the group consisting of boron (B), gallium (Ga), titanium (Ti), zirconium (Zr), zinc (Zn), iron (Fe), vanadium (V) and combinations of any two or more thereof. It is preferred that the heteroatom is a metal (e.g. each of the above heteroatom-containing frameworks may be a metal-containing framework).

It is preferable that the molecular sieve based SCR catalyst formulation comprises, or consist essentially of, a molecular sieve having an aluminosilicate framework (e.g. zeolite) or a silicoaluminophosphate framework (e.g. SAPO). More preferably, the molecular sieve has an aluminosilicate framework (e.g. zeolite).

When the molecular sieve has an aluminosilicate framework (e.g. the molecular sieve is a zeolite), then typically the molecular sieve has a silica to alumina molar ratio (SAR) of from 5 to 200 (e.g. 10 to 200), preferably 10 to 100 (e.g. 10 to 30 or 20 to 80), such as 12 to 40, more preferably 15 to 30.

Typically, the molecular sieve is microporous. A microporous molecular sieve has pores with a diameter of less than 2 nm (e.g. in accordance with the IUPAC definition of "microporous" [see Pure & AppL Chem., 66(8), (1994), 1739-1758)]).

The molecular sieve based SCR catalyst formulation may comprise a small pore molecular sieve (e.g. a molecular sieve having a maximum ring size of eight tetrahedral atoms), a medium pore molecular sieve (e.g. a molecular sieve having a maximum ring size of ten tetrahedral atoms) or a large pore molecular sieve (e.g. a molecular sieve having a maximum ring size of twelve tetrahedral atoms) or a combination of two or more thereof.

When the molecular sieve is a small pore molecular sieve, then the small pore molecular sieve may have a framework structure represented by a Framework Type Code (FTC) selected from the group consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, MER, MON, NSI, OWE, PAU, PHI, RHO, RTH, SAT, SAV, SIV, THO, TSC, UEI, UFI, VNI, YUG and ZON, or a mixture and/or an intergrowth of two or more thereof. Preferably, the small pore molecular sieve has a framework structure represented by a FTC selected from the group consisting of CHA, LEV, AEI, AFX, ERI, SFW, KFI, DDR and ITE. More preferably, the small pore molecular sieve has a framework structure represented by a FTC selected from the group consisting of CHA and AEI. The small pore molecular sieve may have a framework structure represented by the FTC CHA. The small pore molecular sieve may have a framework structure represented by the FTC AEI. When the small pore molecular sieve is a zeolite and has a framework represented by the FTC CHA, then the zeolite may be chabazite.

When the molecular sieve is a medium pore molecular sieve, then the medium pore molecular sieve may have a framework structure represented by a Framework Type Code (FTC) selected from the group consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, -PAR, PCR, PON, PUN, RRO, RSN, SFF, SFG, STF, STI, STT, STW, -SVR, SZR, TER, TON, TUN, UOS, VSV, WEI and WEN, or a mixture and/or an intergrowth of two or more thereof. Preferably, the medium pore molecular sieve has a framework structure represented by a FTC selected from the group consisting of FER, MEL, MFI and STT. More preferably, the medium pore molecular sieve has a framework structure represented by a FTC selected from the group consisting of FER and MFI. When the medium pore molecular sieve is a zeolite and has a framework represented by the FTC FER or MFI, then the zeolite may be ferrierite, silicalite or ZSM-5.

When the molecular sieve is a large pore molecular sieve, then the large pore molecular sieve may have a framework structure represented by a Framework Type Code (FTC) selected from the group consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, -RON, RWY, SAF, SAO, SBE, SBS, SBT, SEW, SFE, SFO, SFS, SFV, SOF, SOS, STO, SSF, SSY, USI, UWY and VET, or a mixture and/or an intergrowth of two or more thereof. Preferably, the large pore molecular sieve has a framework structure represented by a FTC selected from the group consisting of AFI, BEA, MAZ, MOR and OFF. More preferably, the large pore molecular sieve has a framework structure represented by a FTC selected from the group consisting of BEA, MOR and MFI. When the large pore molecular sieve is a zeolite and has a framework represented by the FTC BEA, FAU or MOR, then the zeolite may be a beta zeolite, faujasite, zeolite Y, zeolite X or mordenite.

In general, it is preferred that the molecular sieve is a small pore molecular sieve.

The molecular sieve based SCR catalyst formulation preferably comprises a transition metal exchanged molecular sieve. The transition metal may be selected from the group consisting of cobalt, copper, iron, manganese, nickel, palladium, platinum, ruthenium and rhenium. It is preferred that the transition metal is selected from the group consisting of copper and iron.

The transition metal may be iron. An advantage of SCR catalyst formulations containing an iron exchanged molecular sieve is that such formulations have excellent NOₓ reduction activity at a higher temperature than, for example, a copper exchanged molecular sieve. An iron exchanged molecular sieve may also generate a minimal amount of N₂O (compared to other types of SCR catalyst formulation).

The transition metal may be copper. An advantage of SCR catalyst formulations containing a copper exchanged molecular sieve is that such formulations have excellent low temperature NOₓ reduction activity (e.g. it may be superior to the low temperature NOₓ reduction activity of an iron exchanged molecular sieve).

The transition metal may be present on an extra-framework site on the external surface of the molecular sieve or within a channel, cavity or cage of the molecular sieve.

Typically, the transition metal exchanged molecular sieve comprises an amount of 0.10 to 10 % by weight of the transition metal exchanged molecular, preferably an amount of 0.2 to 5 % by weight.

It may be preferable that the second SCR catalyst composition comprises a mixture of a metal oxide based SCR catalyst formulation and a molecular sieve based SCR catalyst formulation. It is preferred that the (a) metal oxide based SCR catalyst formulation comprises, or consists essentially of, an oxide of vanadium (e.g. V₂O₅) and optionally an oxide of tungsten (e.g. WO₃), supported on titania (e.g. TiO₂) and (b) the molecular sieve based SCR catalyst formulation comprises a transition metal exchanged molecular sieve. More preferably, the transition of the transition metal exchanged molecular sieve is iron.

In general, the second SCR catalyst comprises the second selective catalytic reduction composition in a total concentration of 0.5 to 4.0 g in⁻³, such as 1.0 to 3.5 g in⁻³

The second SCR catalyst comprises a flow-through substrate. The flow-through substrate is preferably a flow-through monolith, such as described above in relation to a diesel oxidation catalyst.

The flow-through monolith (e.g. of the second SCR catalyst) typically has a cell density of 200 to 1000 cells per square inch (cpsi). It is preferred that the flow-through monolith has a cell density of 400 to 1000 cpsi, more preferably 500 to 900 cpsi (e.g. 600 to 800 cpsi).

The flow-through monolith may have a wall thickness (e.g. average internal wall thickness) of 0.05 to 0.35 mm, preferably 0.06 to 0.25 mm, more preferably 0.07 to 0.15 mm (e.g. 0.07 to 0.12 mm).

The substrate of the second SCR catalyst may comprise the second SCR catalyst composition (i.e. the second SCR catalyst is obtained by extrusion) or the second SCR catalyst composition may be disposed or supported on the substrate (i.e. the second SCR catalyst composition is applied onto the substrate by a washcoating method). It is preferred that second SCR catalyst composition is disposed or supported on the substrate.

Generally, the uncoated flow-through monolith has a porosity of from 20 to 80 %, preferably 40 to 70 %, and more preferably 45 to 60 %. It is advantageous for the uncoated flow-through monolith to have a high porosity because it allows a relatively high concentration of the second SCR catalyst composition to be disposed on the substrate.

The second SCR catalyst may comprise a downstream zone, preferably at an outlet end of the substrate. The downstream zone typically comprises an ammonia slip catalyst (ASC) formulation. The ammonia slip catalyst (ASC) formulation is suitable for oxidising ammonia (e.g. the ammonia that has not been oxidised to nitrogen by the second selective catalytic reduction composition). Ammonia slip catalyst (ASC) formulations are known in the art.

### Electrically heatable conduit

The exhaust system of the invention may further comprise an electrically heatable conduit. The electrically heatable conduit is (e.g. located) between the emissions control device for oxidising carbon monoxide (CO) and/or hydrocarbons (HCs) and the first selective catalytic reduction catalyst (i.e. downstream of the emissions control device and upstream of the first SCR catalyst). The electrically heatable conduit is for heating the exhaust gas output from the emissions control device when it has a relatively low temperature. By electrically heating the exhaust gas at this position it is possible to rapidly bring the exhaust gas up to the effective operating temperatures of the downstream first SCR catalyst and the second SCR catalyst for the treatment of NOₓ.

The electrically heatable conduit is typically part (i.e. only part of) of the exhaust gas conduit between the outlet of the emissions control device and the inlet of the selective catalytic reduction filter catalyst. When the emissions control device is a cold start concept (dCSC^{™}) catalyst and a catalysed soot filter (CSF), then preferably the electrically heatable conduit is (e.g. located) downstream of the outlet of the CSF.

It is preferred that the electrically heatable conduit is coupled (e.g. fluidly coupled), preferably directly coupled, to the outlet of the emissions control device.

Typically, the electrically heatable conduit is upstream of the injector for introducing an ammonia precursor into the exhaust gas. When the exhaust system comprises a temperature sensor (e.g. for determining T₁) and/or a NOₓ sensor, then preferably the electrically heatable conduit is (e.g. located) upstream of the temperature sensor (e.g. for determining T₁) and/or a NOₓ sensor.

The electrically heatable conduit typically comprises an electrical power connection, preferably at least two electrical power connections, more preferably only two electrical power connections. Each electrical power connection may be electrically connected to the electrically heatable substrate and an electrical power source. The electrically heatable conduit can be heated by Joule heating, where an electric current through a resistor converts electrical energy into heat energy.

The electrically heatable conduit is an electrically heating conduit, in use.

The electrically heatable conduit may be electrically coupled to an engine management system. The engine management system may be configured to activate the electrically heatable conduit when the temperature of the exhaust gas is < T₁, wherein T₁ is 230 °C, preferably 215 °C, more preferably 200 °C.

Additionally or alternatively, the electrically heatable conduit may be coupled to a temperature sensor (e.g. a thermocouple) located upstream, preferably directly upstream, of the selective catalytic reduction filter catalyst. The temperature sensor is located downstream of the emissions control device for oxidising carbon monoxide (CO) and/or hydrocarbons (HCs). The temperature sensor is suitable for determining T₁.

### Gaseous ammonia doser

The exhaust of the invention may further comprise a means for introducing gaseous ammonia into the exhaust gas. The means for introducing gaseous ammonia into the exhaust gas is preferably a means for introducing gaseous ammonia directly into the exhaust gas, particularly when the temperature of the exhaust gas is < T₁, wherein T₁ is 230 °C, preferably 215 °C, more preferably 200 °C. For the avoidance of doubt, the means for introducing gaseous ammonia into the exhaust gas introduces ammonia in gaseous form directly into the exhaust gas stream. The gaseous ammonia is not generated *in situ* within the main exhaust gas stream, such as from an ammonia precursor.

The means for introducing gaseous ammonia into the exhaust gas is disposed downstream of the emissions control device for oxidising carbon monoxide (CO) and/or hydrocarbons (HCs) and upstream of the first selective catalytic reduction catalyst. It is preferred that the means for introducing gaseous ammonia into the exhaust gas is configured to controllably introduce an amount of gaseous ammonia into the exhaust gas upstream of the first selective catalytic reduction catalyst to provide a molar ammonia to NOₓ ratio (ANR) of from 0.7 to 1.3 (e.g. 0.9 to 1.2), such as 1.0 to 1.2 (e.g. about 1:1).

It has been found that the introduction of gaseous ammonia into the exhaust gas, particularly at relatively low temperatures, can facilitate the conversion of NOₓ over the first SCR catalyst and/or the second SCR catalyst. It is not possible to inject ammonia precursors, such as urea, at relatively low temperatures into the exhaust gas because ammonia will not be formed *in situ* at such temperatures. In fact, urea can crystallise within the exhaust system at low temperatures.

The means for introducing gaseous ammonia into the exhaust gas may comprise an ammonia doser (e.g. a gaseous ammonia doser). The ammonia doser is typically coupled (e.g. fluidly coupled) to the conduit between the emissions control device for oxidising carbon monoxide (CO) and/or hydrocarbons (HCs) and the selective catalytic reduction filter catalyst (i.e. downstream of the outlet of the emissions control device and upstream of the inlet of the first SCR catalyst). When the emissions control device is either a cold start concept (dCSC^{™}) catalyst and a catalysed soot filter (CSF), then preferably the ammonia doser is (e.g. located) downstream of the outlet of the CSF.

When the exhaust system comprises a mixer, then preferably the ammonia doser is disposed upstream of the mixer.

The ammonia doser may be disposed upstream or downstream of the injector for introducing an ammonia precursor into the exhaust gas. It is preferred that the ammonia doser is disposed upstream of the injector for introducing an ammonia precursor into the exhaust gas.

When the exhaust system comprises an electrically heatable conduit, then the ammonia doser may be disposed upstream or downstream of the electrically heatable conduit. It is preferred that the ammonia doser is disposed downstream of the electrically heatable conduit.

The means for introducing gaseous ammonia into the exhaust gas may further comprise a means for generating gaseous ammonia from an ammonia precursor. The means for generating gaseous ammonia from an ammonia precursor is coupled (e.g. fluidly coupled) to the ammonia doser. The means for generating gaseous ammonia from an ammonia precursor is located in a secondary exhaust gas conduit. The ammonia doser is located within the main exhaust system.

Typically, the means for generating gaseous ammonia from an ammonia precursor comprises:
(i) an injector for introducing an ammonia precursor into a secondary exhaust gas conduit; and
(ii) a hydrolysis catalyst for converting the ammonia precursor into gaseous ammonia;
wherein the injector for introducing an ammonia precursor into a secondary exhaust gas conduit is (e.g. located) upstream of the hydrolysis catalyst.

For the avoidance of doubt, the injector for introducing an ammonia precursor into a secondary exhaust gas conduit is an additional injector to the injector described above for introducing an ammonia precursor into the main exhaust gas stream. The injector for introducing an ammonia precursor into a secondary exhaust gas conduit is referred to herein as a "second injector".

Typically, the second injector is a liquid injector suitable for introducing a solution comprising an ammonia precursor into the secondary exhaust gas conduit. The ammonia precursor is preferably urea or ammonium formate, more preferably urea.

The secondary injector atomizes the ammonia precursor or a solution comprising the ammonia precursor upon injection into the secondary exhaust gas conduit upstream of the hydrolysis catalyst, such as by spraying the ammonia precursor or the solution comprising the ammonia precursor. The secondary injector may be an airless injector or an air-assisted injector.

The secondary injector is configured to introduce an ammonia precursor into the secondary exhaust gas conduit upstream of the hydrolysis catalyst. It is preferred that the secondary injector is configured to controllably introduce an amount of ammonia precursor into the secondary exhaust gas conduit upstream of the hydrolysis catalyst.

The secondary injector is typically coupled (e.g. fluidly coupled) to an ammonia precursor storage tank, preferably the ammonia precursor storage tank is coupled to the injector for introducing an ammonia precursor into the exhaust gas (i.e. the main injector).

The hydrolysis catalyst for converting the ammonia precursor into gaseous ammonia typically comprises a substrate and a hydrolysis catalyst composition disposed or supported on the substrate. The substrate is preferably a flow-through substrate, more preferably a cordierite flow-through substrate. Catalyst compositions for hydrolysing urea are known in the art.

The hydrolysis catalyst composition may comprise, or consist essentially of titanium dioxide (TiO₂), such as Au-doped TiO₂.

The outlet of the hydrolysis catalyst composition is typically coupled (e.g. fluidly coupled) to the ammonia doser.

Generally, the secondary exhaust gas conduit is coupled (e.g. fluidly coupled) to an exhaust manifold of the diesel engine. It is preferred that the second exhaust gas conduit is coupled to the exhaust manifold upstream of a turbocharger. The secondary exhaust gas conduit by-passes the turbocharger. In this configuration, a small amount of hot exhaust gas (approximately 1.5 to 7.0%) is pulled from the engine into the secondary exhaust gas conduit (i.e. a side flow system). When the exhaust gas is diverted from the turbocharger to the secondary exhaust gas conduit, the temperature of the exhaust gas in the secondary exhaust gas conduit is significantly higher than the temperature in the main exhaust gas stream.

The means for generating gaseous ammonia from an ammonia precursor may further comprise a particulate filter, preferably a catalysed soot filter (CSF).

The particulate filter or CSF is disposed in the second exhaust gas conduit upstream of the injector for introducing an ammonia precursor into the secondary exhaust gas conduit. The particulate filter or CSF is also upstream of the hydrolysis catalyst for converting the ammonia precursor into gaseous ammonia.

The secondary exhaust gas conduit may comprise a valve for closing the secondary exhaust gas conduit (e.g. when the temperature (T₁) of the exhaust gas between the emissions control device and the first SCR catalyst is ≥ is 200 °C, preferably 215 °C, more preferably 230 °C). The valve may be electrically coupled to the engine management system.

Typically, the valve is disposed upstream of the secondary injector, preferably upstream of the particulate filter or the CSF.

### Ammonia slip catalyst (ASC)

In addition or as alternative to an ammonia slip catalyst (ASC) formulation being present in a downstream zone of the SCR catalyst, the exhaust system may further comprise an ammonia slip catalyst (ASC) (i.e. a separate ASC). The ASC comprises an ammonia slip catalyst formulation disposed on a substrate (i.e. a substrate that is separate to the substrate of the second SCR catalyst).

Typically, the ammonia slip catalyst is downstream, preferably directly downstream, of the second SCR catalyst. Thus, an outlet of the second SCR catalyst is typically coupled (e.g. fluidly coupled) to an inlet of the ammonia slip catalyst.

The substrate of the ammonia slip catalyst is preferably a flow-through monolith.

### Vehicle

A vehicle may comprise a diesel engine and an exhaust system of the invention. The diesel engine is typically a conventional (i.e. traditional) diesel engine.

The diesel engine may comprise an engine management system.

The vehicle may be a light-duty diesel vehicle (LDV), such as defined in US or European legislation. A light-duty diesel vehicle typically has a weight of < 2840 kg, more preferably a weight of < 2610 kg.

In the US, a light-duty diesel vehicle (LDV) refers to a diesel vehicle having a gross weight of ≤ 8,500 pounds (US lbs). In Europe, the term light-duty diesel vehicle (LDV) refers to (i) passenger vehicles comprising no more than eight seats in addition to the driver's seat and having a maximum mass not exceeding 5 tonnes, and (ii) vehicles for the carriage of goods having a maximum mass not exceeding 12 tonnes.

It is preferred that the vehicle is a heavy-duty diesel vehicle (HDV), such as a diesel vehicle having a gross weight of > 8,500 pounds (US lbs), as defined in US legislation.

The diesel engine may be run on a diesel fuel comprising ≤ 50 ppm of sulfur, more preferably ≤ 15 ppm of sulfur, such as ≤ 10 ppm of sulfur, and even more preferably ≤ 5 ppm of sulfur. Such diesel fuels are often referred to as "ultra-low-sulfur diesel" (ULSD).

### DEFINTIONS

The term "mixed oxide" as used herein generally refers to a mixture of oxides in a single phase, as is conventionally known in the art. The term "composite oxide" as used herein generally refers to a composition of oxides having more than one phase, as is conventionally known in the art.

For the avoidance of doubt, the term "combination of platinum (Pt) and palladium (Pd)" as used herein in relation to a region, zone or layer refers to the presence of both platinum and palladium. The word "combination" does not require that the platinum and palladium are present as a mixture or an alloy, although such a mixture or alloy is embraced by this term.

The expression "consist essentially" as used herein limits the scope of a feature to include the specified materials, and any other materials or steps that do not materially affect the basic characteristics of that feature, such as for example minor impurities. The expression "consist essentially of" embraces the expression "consisting of".

The expression "substantially free of" as used herein with reference to a material, typically in the context of the content of a washcoat region, a washcoat layer or a washcoat zone, means that the material in a minor amount, such as ≤ 5 % by weight, preferably ≤ 2 % by weight, more preferably ≤ 1 % by weight. The expression "substantially free of" embraces the expression "does not comprise".

The expression "about" as used herein with reference to an end point of a numerical range includes the exact end point of the specified numerical range. Thus, for example, an expression defining a parameter as being up to "about 0.2" includes the parameter being up to and including 0.2.

### EXAMPLES

The invention will now be illustrated by the following non-limiting examples.

### Reference Example 1

An exhaust system comprising a combination of a diesel oxidation catalyst (DOC), a selective catalytic reduction filter catalyst and an SCR catalyst having a high porosity substrate was tested as described below.

The diesel oxidation catalyst and the SCR catalyst were manufactured using conventional processes, such as described in WO 99/47260, WO 2011/080525 and WO 2014/195685. The selective catalytic reduction filter catalyst was manufactured using the method described in WO2015/145122.

The substrate of the diesel oxidation catalyst (DOC) was 10.5" x 4" in size. The substrate had a cell density of 400 cpsi and a wall thickness of 7 mil. The loading of the catalyst composition was 40 g ft⁻³. The catalyst composition contained Pt, Pd and Al₂O₃.

The substrate of the selective catalytic reduction filter catalyst was 10.5" x 12" in size.

The wall-flow substrate had a cell density of 300 cpsi and a wall thickness of 12 mil. The washcoat loading was 1.7 g in⁻³. The catalyst composition contained a Cu zeolite having the CHA framework. The copper loading was 3.33 wt%.

The substrate of the selective catalytic reduction (SCR) catalyst was 10.5" x 6" in size. The substrate had a cell density of 600 cpsi and a wall thickness of 4 mil. The washcoat loading was 4 g in⁻³. The catalyst composition contained a Cu zeolite having the CHA framework. The copper loading was 3.33 wt%.

The DOC, SCR-DPF and the SCR catalyst were each hydrothermally aged (using 10 % water) at 650 °C for 100 hours prior to testing the exhaust system.

### Inventive Example 2

The exhaust system of Example 1, except that the diesel oxidation catalyst (DOC) was replaced with a cold start concept (dCSC^{™}) catalyst, was tested as described below.

The substrate of the cold start concept (dCSC^{™}) catalyst was 10.5" x 6" in size. The substrate had a cell density of 400 cpsi and a wall thickness of 4 mil. The cold start concept catalyst had two layers; a bottom layer and a top layer. The bottom layer (i.e. coated directly on to the substrate) had a washcoat loading of 3 g in⁻³ of the catalyst composition. The catalyst composition was a zeolite containing Pd, where the zeolite had a CHA framework. The loading of Pd was 100 g ft⁻³. The top layer (coated onto the bottom layer) contained Pt (50 g ft⁻³) and alumina (1.12 g in⁻³). The overall ratio by weight of Pt to Pd in the catalyst was 1:2.

The cold start concept (dCSC^{™}) catalyst, SCR-DPF and the SCR catalyst were each hydrothermally aged in the same way as Example 1.

### Test conditions

The exhaust systems of Examples 1 to 3 were each tested using a 2007 model year Cummins ISL diesel engine. The engine details are shown in Table 1. During this study, EGR was adjusted to have 4.0 g/hp-hr engine out NOₓ. Urea was delivered and injected into the exhaust by an air assisted Grundfos pump. A six inch static mixer was placed after the injection nozzle and before the SCR-DPF in each exhaust system to ensure good mixing and uniform urea distribution in the exhaust.

**Table 1**

| Model | Cummins ISL | |
|---|---|---|
| Emissions Standard | EPA 2007 | |
| Displacement | 8.9 L | |
| Type | 4-stroke | |
| Power | 425 Hp | |
| Config/Cylinders | Variable Geometry Turbocharger Inline 6 Cylinder | |
| Controls | Electronic Control Module (ECM) | |

| Certified Emission Level | | |
|---|---|---|
| NOx (g/bhp-hr) | | 1.5 |
| non-methane HC (g/bhp-hr) | | 0.14 |
| particulate matter (g/bhp-hr) | | 0.01 |

| NOₓ Emission During Test (EGR Adjusted) | | |
|---|---|---|
| NOₓ (g/bhp-hr) during cold FTP | | 4.0 |

The dynamometer utilized in this study was 800HP AC motoring dyno from Horiba. Intake air flow was measured with Sierra air flow meter ranging from 0-2400kg/hr with +/-1% accuracy in full scale. Engine out emissions were measured using Horiba MEXA 7500D dual bench (CO, HC and NOₓ) analysers with +/-1% accuracy across the full scale. System out emissions were also measured using an FTIR (MKS model 2030 HS). SCR-DPF backpressure was monitored using pressure transducers, Setra Model 206. Temperatures in the system were measured using K type thermocouples.

Heavy duty transient cycle (FTP) testing was conducted to determine the performance of this system. Cold and hot cycles were used during different parts of the study. The average ammonia to NOₓ ratio (ANR) for urea dosing during transient cycles was 1.2 to 1.3.

### Results

### NOₓ reduction under cold FTP cycle

The overall NOₓ conversion for each of the exhaust systems of Examples 1 and 2 was measured during HDD cold FTP cycle with an ammonia to NOₓ ratio (ANR) of 1.2 to 1.3.

Before the start of the test, the system was actively regenerated to remove soot, and then the system was cooled down for 3 hours before the start of FTP cycle. Standard urea injection was used during these tests.

During cold FTP, the NOₓ conversion achieved with the DOC system (Example 1) was 75%. When testing the system with the cold start concept (dCSC^{™}) catalyst (Example 2), the NOₓ conversion increased to 80%. This increase was due to the storage and release of NOₓ by the cold start concept (dCSC^{™}) catalyst. The cold start concept (dCSC^{™}) catalyst stored NOₓ in the first two hundred seconds of the cycle when the system was cold. As the system temperature increased, approximately three hundred seconds into the cycle, the stored NOₓ was released. At this point the SCR-DPF was warm and was capable of reducing NOₓ. Even though there was no urea dosing during the cold section of the cycle, the NOₓ storage and subsequent release during the warm period enabled NOₓ conversion when urea dosing took place. When using a DOC in the system (Example 1), no reduction was achieved in the first two hundred seconds. Similar to the previous system (Example 2), the temperature was too low for urea dosing and hence un-stored NOₓ could not be converted during this section.

The results during cold FTP testing indicated that the system designed with the cold start concept (dCSC^{™}) catalyst (Example 2) was capable of higher NOₓ conversion due to the storage and release capability of the cold start concept (dCSC^{™}) catalyst. The comparison between the two systems is shown in Figure 6. This performance demonstrated the benefit of the exhaust system comprising the cold start concept (dCSC^{™}) catalyst for future high NOₓ conversion systems.

### Effect of gaseous NH₃ in the cold FTP cycle

The effect of dosing NH₃ gas under the cold temperature conditions of the cold FTP cycle was evaluated.

A side flow NH₃ doser was designed in order to generate and inject NH₃ gas into the main exhaust for conditions when urea could not be dosed due to very cold temperatures. The side flow NH₃ doser was connected to the engine pre-turbo and a small amount of hot exhaust flow (approximately 1.5 to 7.0% (e.g 15-25kg/hr)) was pulled from the engine into the side flow system. Since flow was diverted from pre-turbo to the side flow doser, exhaust flow temperature was significantly higher than the main exhaust temperature. Urea was injected into the side flow reactor and it was converted into NH₃ gas over a hydrolysis catalyst. The NH₃ created was introduced back into the main exhaust, upstream of the mixer and the SCR-DPF.

The side flow NH₃ doser control was used to inject NH₃ into the main exhaust stream from the beginning of the cold FTP cycle (i.e. when it was too cold for urea dosing), until the SCR-DPF inlet temperature reached 215 °C. When the temperature was greater than 215 °C, NH₃ dosing was stopped and the main (standard) urea dosing system was activated to inject urea into the exhaust, for the remainder of the cycle. Both system injection control strategies were set to maintain an overall an ammonia to NOₓ ratio (ANR) of approximately 1.2. A schematic for the arrangement is shown in Figure 4.

For the exhaust system comprising a DOC (Example 1), NOₓ reduction was observed after 250 seconds. This was due to the early availability of NH₃ gas in the exhaust stream.

The experiment was repeated using the exhaust system comprising a cold start concept (dCSC^{™}) catalyst (Example 2). The cold start concept (dCSC^{™}) catalyst stored NOₓ through the first 200 seconds. As the catalyst temperature warmed up, NOₓ was released. Since there was NH₃ available at the beginning of the cycle, more NOₓ was converted on the SCR-DPF as compared to the exhaust system of Example 2 when NOₓ reduction was performed under cold FTP cycle without the addition of NH₃ using the side flow NH₃ doser.

When NH₃ was added using the side flow NH₃ doser during the cold FTP cycle, NOₓ conversion for the exhaust system containing the DOC (Example 1) increased to 80 % from the baseline. For the exhaust system comprising the cold start concept (dCSC^{™}) catalyst (Example 2), NOₓ conversion increased to 83 %. This test indicated that the presence of NH₃ in the early stages of the cycle can provide a further increase in NOₓ conversion.

### Effect of pre-stored NH₃ in the cold FTP cycle

The impact of pre-stored NH₃ along with standard urea dosing was evaluated under the cold FTP cycle. The system was pre-saturated with ammonia prior to FTP testing, in order to simulate early and sufficient availability of gaseous NH₃. The pre-saturation testing was conducted during the preparation cycle before the start of cold FTP. The pre-saturation was carried out by running several hot FTP cycles with an ANR of approximately 1.2 to 1.3 until the SCR-DPF and SCR catalyst were considered to be saturated with NH₃. After system saturation, the engine was shut down and the system was cooled down for 3 hours. After cool down, one cold FTP test was carried out with the system along with normal urea dosing. NH₃ dosing from the side reactor was not utilized during this time.

As before, the exhaust temperature was cold and no urea was injected for the majority of the first half of the cycle. For the exhaust system of Example 1 (DOC), the average temperature was approximately 245 °C. However, the NOₓ reduction started at 100 seconds when there was a temperature increase. The majority of NOₓ conversation started around 230 seconds into the cycle. This was due to the presence of pre-saturated NH₃ in the system (SCR-DPF and SCR catalyst).

For the exhaust system of Example 2 (cold start concept (dCSC^{™}) catalyst), NOₓ is stored at the beginning of the cycle and since pre-stored NH₃ is available, the SCR-DPF is capable of reducing NOₓ further in the first 150 seconds. As NOₓ is released around 250 seconds into the cycle, the SCR-DPF is capable of reducing all the NOₓ due to pre-stored NH₃.

During cold FTP, NOₓ conversion was increased to 88% for the DOC containing system (Example 1) and to at least 91% for the cold start concept (dCSC^{™}) catalyst containing system (Example 2) using the pre-saturation NH₃ strategy. This test indicated that much higher NOₓ conversion is possible during the cold FTP cycle if sufficient NH₃ is present from the early stages of the cycle.

### Effect of pre-stored NH₃ and thermal management in the cold FTP cycle

An electrical heater was installed after either the DOC (Example 1) or the cold start concept (dCSC^{™}) catalyst (Example 2) and before urea injection and the SCR-DPF (see Figure 5).

To pre-store NH₃, five back to back FTP cycles with urea injection of ANR 1.2-1.3 were run to pre-treat each system. The system was cooled for three hours before running the cold FTP cycle. The same ANR of 1.2-1.3 was used during this cycle to determine the system NOₓ reduction capability.

The electrical heater was used to warm up the exhaust in the first 400 seconds (i.e. cold section) of the cold FTP cycle. The maximum power for the heater was 20KW. The electrical heater was turned off 400 seconds into the cycle. This test was to simulate a condition with pre-saturation of NH₃ as well as the presence of thermal management to enable early NH₃-NOₓ reaction. The presence of thermal management also enabled early dosing of urea.

By turning on the electrical heater, the exhaust temperature was ramped up quickly and reached 200 °C two hundred seconds into the cycle. The average temperature was approximately 270 °C. As NH₃ was pre-stored in the SCR-DPF and SCR catalyst, sufficient reductant was available from the beginning of the cycle. There was no urea dosing while the temperature was below 200 °C. Urea dosing was enabled from 200 seconds into the cycle as the SCR catalyst temperature reached 200 °C.

For the exhaust system containing a DOC (Example 1), this enabled a NOₓ reduction of 94%. NOₓ reduction started from 80 seconds into the cycle due to the higher temperature. There were almost no NOₓ emission peaks after 100 seconds into the cycle.

For the exhaust system containing the cold start concept (dCSC^{™}) catalyst (Example 2), the cold start concept (dCSC^{™}) catalyst was capable of storing a significant amount of NOₓ at the start of the cycle through the first 100 seconds. After 100 seconds, with temperature increasing, the cold start concept (dCSC^{™}) catalyst started releasing some NOₓ with most coming out after 250 seconds. Meanwhile, with the heater, the inlet temperature of the SCR-DPF reached 200 °C around 100 seconds in the cycle, which enabled NOₓ reduction across the SCR-DPF and SCR catalyst. This was also supported by the stored NH₃ available. As a result, there was no NOₓ breakthrough in the tailpipe after the first 100 seconds and all NOₓ was converted. This resulted in a NOₓ conversion of 98% for Example 2, the exhaust system containing the cold start concept (dCSC^{™}) catalyst.

The results from the above tests are shown in Table 2, which compare the NOₓ conversion of the exhaust system containing the cold start concept (dCSC^{™}) catalyst (Example 2) with the exhaust system containing the DOC (Example 1) for all the options tested under cold FTP. The results with the cold start concept (dCSC^{™}) catalyst always exhibited higher system NOₓ reduction compared to the DOC containing system, demonstrating the benefits of the cold start concept (dCSC^{™}) catalyst.

**Table 1**

| | Average Temp (°C) | NOₓ Conversion (%) | |
|---|---|---|---|
| | | Example 1 | Example 2 |
| Baseline | 245 | 75 | 80 |
| Gaseous NH₃ + urea dosing | 245 | 80 | 83 |
| Pre-stored NH₃ + urea dosing | 245 | 88 | 91 |
| Pre-stored NH₃ + thermal management + urea dosing | 270 | 94 | 98 |

### Inventive Example 3

The exhaust system of Example 2 was modified by changing the catalyst composition of the SCR-DPF from Cu zeolite to a vanadium containing catalyst. The wall-flow substrate that was used was the same as the wall-flow substrate that was used for the selective catalytic reduction filter catalyst of Example 1.

The catalyst composition of the SCR-DPF contained a vanadium-tungsten-titania catalyst, where the loading of vanadium was 24 g ft⁻³, the loading of tungsten was 303 g ft⁻³ and the loading of titania 1.12 g in⁻³. The catalyst composition also contained an iron exchanged zeolite, where the zeolite had the MFI framework. The loading of Fe was 10 g ft⁻³ and the loading of the zeolite was 0.16 g in⁻³.

The cold start concept (dCSC^{™}) catalyst was identical to the cold start concept catalyst used in Example 2. The SCR catalyst was identical to the SCR catalyst that was used in Example 1.

The cold start concept (dCSC^{™}) catalyst, SCR-DPF and the SCR catalyst were each hydrothermally aged in the same way as Example 1.

The exhaust system of Example 3 was tested using the same method and conditions that were used for Examples 1 and 2 to assess the effect of pre-stored NH₃ and the effect of pre-stored NH₃ and thermal management in the cold FTP cycle. The exhaust system of Example 2 was re-tested to provide a comparison. The amount of N₂O that was emitted by the exhaust systems of Examples 2 and 3 was also determined. The results are shown in Table 3.

**Table 2**

| | NOₓ Conversion (%) | | N₂O (g/hp-hr) | |
|---|---|---|---|---|
| | Example 2 | Example 3 | Example 2 | Example 3 |
| Pre-stored NH₃ + urea dosing | 91 | 92 | 0.13 | 0.04 |
| Pre-stored NH₃ + thermal management + urea dosing | 98 | 997 | 0.15 | 0.06 |

The exhaust system of Example 3 shows comparable NOₓ conversion to the exhaust system of Example 2. However, the amount of N₂O that was emitted by the exhaust system of Example 3 was significantly lower that the amount of N₂O that was emitted by the exhaust system of Example 2.

Experiments have also shown that the emission obtained from an exhaust system where the Cu-zeolite based SCR catalyst in Example 3 has been replaced with an extruded vanadium based SCR catalyst can emit a lower amount of N₂O compared to the exhaust system of Example 3 while also providing comparable NOₓ conversion.

## Claims

1. An exhaust system for treating an exhaust gas produced by a diesel engine comprising:
(a) an emissions control device for oxidising carbon monoxide (CO) and/or hydrocarbons (HCs), wherein the emissions control device comprises a platinum group metal (PGM) and a substrate, wherein the platinum group metal (PGM) is selected from platinum (Pt), palladium (Pd) and a combination thereof;
(b) an injector for introducing an ammonia precursor into the exhaust gas, which is downstream of the emissions control device for oxidising carbon monoxide (CO) and/or hydrocarbons (HCs);
(c) a first selective catalytic reduction catalyst downstream of the injector for introducing an ammonia precursor into the exhaust gas, wherein the first selective catalytic reduction catalyst comprises a substrate and a first selective catalytic reduction composition, wherein the substrate is either a flow-through substrate or a filtering substrate;
(d) a second selective catalytic reduction catalyst downstream of the first selective catalytic reduction catalyst, wherein the second selective catalytic reduction catalyst comprises a flow-through substrate and a second selective catalytic reduction (SCR) composition; and
wherein at least one of the emissions control device and the first selective catalytic reduction catalyst has a filtering substrate; and wherein the emissions control device for oxidising carbon monoxide (CO) and/or hydrocarbons (HCs) comprises a cold start concept catalyst, wherein the cold start concept catalyst comprises a catalytic material supported on a substrate, wherein the catalytic material comprises a molecular sieve catalyst, wherein the molecular sieve catalyst comprises a noble metal-exchanged molecular sieve, wherein the noble metal comprises palladium and wherein the molecular sieve is a small pore molecular sieve having a framework structure represented by a Framework Type Code (FTC) represented by AEI or CHA.

2. An exhaust system according to claim 1 further comprising a means for introducing gaseous ammonia into the exhaust gas, wherein the means for introducing gaseous ammonia is disposed downstream of the emissions control device for oxidising carbon monoxide (CO) and/or hydrocarbons (HCs) and upstream of the first selective catalytic reduction catalyst.

3. An exhaust system according to claim 2, wherein the means for generating gaseous ammonia from an ammonia precursor comprises:
(i) an injector for introducing an ammonia precursor into a secondary exhaust gas conduit; and
(ii) a hydrolysis catalyst for converting the ammonia precursor into gaseous ammonia; wherein the injector for introducing an ammonia precursor into a secondary exhaust gas conduit is upstream of the hydrolysis catalyst.

4. An exhaust system according to claim 3, wherein the secondary exhaust gas conduit is coupled to an exhaust manifold of the diesel engine upstream of a turbocharger.

5. An exhaust system according to any one of the preceding claims further comprising an electrically heatable conduit between the emissions control device for oxidising carbon monoxide (CO) and/or hydrocarbons (HCs) and the first selective catalytic reduction catalyst.

6. An exhaust system according to claim 5, wherein the electrically heatable conduit is part of an exhaust gas conduit between an outlet of the emissions control device for oxidising carbon monoxide (CO) and/or hydrocarbons (HCs) and an inlet of the first selective catalytic reduction catalyst.

7. An exhaust system according to any one of the preceding claims, where the emissions control device for oxidising carbon monoxide (CO) and/or hydrocarbons (HCs) may be selected from the group consisting of (i) a diesel oxidation catalyst (DOC), (ii) a catalysed soot filter (CSF), (iii) a cold start concept catalyst; (iv) a diesel oxidation catalyst (DOC) and a catalysed soot filter (CSF); and (v) a cold start concept catalyst and a catalysed soot filter (CSF).

8. An exhaust system according to any one of the preceding claims, wherein (b) the injector is a liquid injector for introducing a solution comprising an ammonia precursor into the exhaust gas.

9. An exhaust system according to any one of the preceding claims, wherein the first selective catalytic reduction composition comprises a metal oxide based SCR catalyst formulation, a molecular sieve based SCR catalyst formulation or a mixture thereof.

10. An exhaust system according to any one of the preceding claims, wherein the (d) selective catalytic reduction (SCR) catalyst has a flow-through substrate, which is a flow-through monolith, wherein the uncoated flow-through monolith has a porosity of 45 to 60 %.

11. An exhaust system according to any one of the preceding claims, wherein the second selective catalytic reduction composition comprises a metal oxide based SCR catalyst formulation, a molecular sieve based SCR catalyst formulation or a mixture thereof.

## Patentansprüche

1. Abgassystem zur Behandlung eines Abgases, das von einem Dieselmotor erzeugt wird, umfassend:
(a) eine Emissionskontrollvorrichtung zum Oxidieren von Kohlenmonoxid (CO) und/oder Kohlenwasserstoffen (HCs), wobei die Emissionskontrollvorrichtung ein Platingruppenmetall (PGM) und ein Substrat umfasst, wobei das Platingruppenmetall (PGM) aus Platin (Pt), Palladium (Pd) und einer Kombination davon ausgewählt ist;
(b) einen Injektor zum Einleiten eines Ammoniakvorläufers in das Abgas, das der Emissionskontrollvorrichtung nachgeschaltet ist, um Kohlenmonoxid (CO) und/oder Kohlenwasserstoffe (HCs) zu oxidieren;
(c) einen ersten selektiven katalytischen Reduktionskatalysator, der dem Injektor nachgeschaltet ist zum Einleiten eines Ammoniakvorläufers in das Abgas, wobei der erste selektive katalytische Reduktionskatalysator ein Substrat und eine erste selektive katalytische Reduktionszusammensetzung umfasst, wobei das Substrat entweder ein Durchflusssubstrat oder ein Filtersubstrat ist;
(d) einen zweiten selektiven katalytischen Reduktionskatalysator, der dem ersten selektiven katalytischen Reduktionskatalysator nachgeschaltet ist, wobei der zweite selektive katalytische Reduktionskatalysator ein Durchflusssubstrat und eine zweite selektive katalytische Reduktionszusammensetzung (SCR-Zusammensetzung) umfasst; und
wobei mindestens eines der Emissionskontrollvorrichtung und des ersten selektiven katalytischen Reduktionskatalysators ein Filtersubstrat aufweist; und wobei die Emissionskontrollvorrichtung zum Oxidieren von Kohlenmonoxid (CO) und/oder Kohlenwasserstoffen (HCs) einen Kaltstartkonzeptionskatalysator umfasst, wobei der Kaltstartkonzeptionskatalysator ein katalytisches Material umfasst, das auf einem Substrat getragen wird, wobei das katalytische Material einen Molekularsiebkatalysator umfasst, wobei der Molekularsiebkatalysator ein edelmetallausgetauschtes Molekularsieb umfasst, wobei das Edelmetall Palladium umfasst und wobei das Molekularsieb ein kleinporiges Molekularsieb ist, das eine Gerüststruktur aufweist, die durch einen Rahmentyp-Code (FTC) dargestellt wird, der durch AEI oder CHA dargestellt wird.

2. Abgassystem nach Anspruch 1, ferner umfassend ein Mittel zum Einleiten von gasförmigem Ammoniak in das Abgas, wobei das Mittel zum Einleiten von gasförmigem Ammoniak der Emissionskontrollvorrichtung zum Oxidieren von Kohlenmonoxid (CO) und/oder Kohlenwasserstoffen (HCs) nachgeschaltet ist und dem ersten selektiven katalytischen Reduktionskatalysator vorgeschaltet ist.

3. Abgassystem nach Anspruch 2, wobei das Mittel zum Erzeugen von gasförmigem Ammoniak aus einem Ammoniakvorläufer umfasst:
(i) einen Injektor zum Einleiten eines Ammoniakvorläufers in eine sekundäre Abgasleitung; und
(ii) einen Hydrolysekatalysator zum Umwandeln des Ammoniakvorläufers in gasförmiges Ammoniak; wobei der Injektor zum Einleiten eines Ammoniakvorläufers in eine sekundäre Abgasleitung dem Hydrolysekatalysator vorgeschaltet ist.

4. Abgassystem nach Anspruch 3, wobei die sekundäre Abgasleitung mit einem Abgaskrümmer des Dieselmotors stromaufwärts eines Turboladers gekoppelt ist.

5. Abgassystem nach einem der vorstehenden Ansprüche, ferner umfassend eine elektrisch beheizbare Leitung zwischen der Emissionskontrollvorrichtung zum Oxidieren von Kohlenmonoxid (CO) und/oder Kohlenwasserstoffen (HCs) und dem ersten selektiven katalytischen Reduktionskatalysator.

6. Abgassystem nach Anspruch 5, wobei die elektrisch beheizbare Leitung Teil einer Abgasleitung zwischen einem Auslass der Emissionssteuerungsvorrichtung zum Oxidieren von Kohlenmonoxid (CO) und/oder Kohlenwasserstoffen (HCs) und einem Einlass des ersten selektiven katalytischen Reduktionskatalysators ist.

7. Abgassystem nach einem der vorstehenden Ansprüche, wobei die Emissionskontrollvorrichtung zum Oxidieren von Kohlenmonoxid (CO) und/oder Kohlenwasserstoffen (HCs) aus der Gruppe ausgewählt sein kann, die besteht aus (i) einem Dieseloxidationskatalysator (DOC), (ii) einem katalysierten Rußfilter (CSF), (iii) einem Kaltstartkonzeptkatalysator; (iv) einem Dieseloxidationskatalysator (DOC) und einem katalysierten Rußfilter (CSF); und (v) einem Kaltstartkonzeptkatalysator und einem katalysierten Rußfilter (CSF).

8. Abgassystem nach einem der vorstehenden Ansprüche, wobei (b) der Injektor ein flüssiger Injektor zum Einleiten einer einen Ammoniakvorläufer umfassenden Lösung in das Abgas ist.

9. Abgassystem nach einem der vorstehenden Ansprüche, wobei die zweite selektive katalytische Reduktionszusammensetzung eine SCR-Katalysatorformulierung auf Metalloxidbasis, eine SCR-Katalysatorformulierung auf Molekularsiebbasis oder eine Mischung davon umfasst.

10. Abgassystem nach einem der vorstehenden Ansprüche, wobei der (d) selektive katalytische Reduktionskatalysator (SCR-Katalysator) ein Durchflusssubstrat aufweist, das ein Durchflussmonolith ist, wobei der unbeschichtete Durchflussmonolith eine Porosität von 45 bis 60 % aufweist.

11. Abgassystem nach einem der vorstehenden Ansprüche, wobei die erste selektive katalytische Reduktionszusammensetzung eine SCR-Katalysatorformulierung auf Metalloxidbasis, eine SCR-Katalysatorformulierung auf Molekularsiebbasis oder eine Mischung davon umfasst.

## Revendications

1. Système d'échappement pour le traitement d'un gaz d'échappement produit par un moteur diesel comprenant :
(a) un dispositif de contrôle d'émissions pour l'oxydation de monoxyde de carbone (CO) et/ou d'hydrocarbures (HCs), dans lequel le dispositif de contrôle d'émissions comprend un métal de groupe de platine (PGM) et un substrat, dans lequel le métal de groupe de platine (PGM) est choisi parmi le platine (Pt), le palladium (Pd) et une combinaison de ceux-ci ;
(b) un injecteur pour l'introduction d'un précurseur d'ammoniac dans le gaz d'échappement, qui est en aval du dispositif de contrôle d'émissions pour l'oxydation de monoxyde de carbone (CO) et/ou d'hydrocarbures (HCs) ;
(c) un premier catalyseur de réduction catalytique sélective en aval de l'injecteur pour l'introduction d'un précurseur d'ammoniac dans le gaz d'échappement, dans lequel le premier catalyseur de réduction catalytique sélective comprend un substrat et une première composition de réduction catalytique sélective, dans lequel le substrat est soit un substrat à flux continu soit un substrat filtrant ;
(d) un second catalyseur de réduction catalytique sélective en aval du premier catalyseur de réduction catalytique sélective, dans lequel le second catalyseur de réduction catalytique sélective comprend un substrat à flux continu et une seconde composition de réduction catalytique sélective (SCR) ; et
dans lequel au moins l'un du dispositif de contrôle d'émissions et du premier catalyseur de réduction catalytique sélective a un substrat filtrant ; et dans lequel le dispositif de contrôle d'émissions pour l'oxydation de monoxyde de carbone (CO) et/ou d'hydrocarbures (HCs) comprend un catalyseur de concept de démarrage à froid, dans lequel le catalyseur de concept de démarrage à froid comprend un matériau catalytique supporté sur un substrat, dans lequel le matériau catalytique comprend un catalyseur à tamis moléculaire, dans lequel le catalyseur à tamis moléculaire comprend un tamis moléculaire à échange de métal noble, dans lequel le métal noble comprend du palladium et dans lequel le tamis moléculaire est un tamis moléculaire à petits pores ayant une structure de cadre représentée par un Code de type de cadre (FTC) représenté par AEI ou CHA.

2. Système d'échappement selon la revendication 1, comprenant en outre un moyen d'introduction d'ammoniac gazeux dans le gaz d'échappement, dans lequel le moyen d'introduction d'ammoniac gazeux est disposé en aval du dispositif de contrôle d'émissions pour l'oxydation de monoxyde de carbone (CO) et/ou d'hydrocarbures (HCs) et en amont du premier catalyseur de réduction catalytique sélective.

3. Système d'échappement selon la revendication 2, dans lequel le moyen de génération d'ammoniac gazeux à partir d'un précurseur d'ammoniac comprend :
(i) un injecteur pour l'introduction d'un précurseur d'ammoniac dans un conduit de gaz d'échappement secondaire ; et
(ii) un catalyseur d'hydrolyse pour la conversion du précurseur d'ammoniac en ammoniac gazeux ; dans lequel l'injecteur pour l'introduction d'un précurseur d'ammoniac dans un conduit de gaz d'échappement secondaire est en amont du catalyseur d'hydrolyse.

4. Système d'échappement selon la revendication 3, dans lequel le conduit de gaz d'échappement secondaire est couplé à un collecteur d'échappement du moteur diesel en amont d'un turbocompresseur.

5. Système d'échappement selon l'une quelconque des revendications précédentes comprenant en outre un conduit chauffable électriquement entre le dispositif de contrôle d'émissions pour l'oxydation de monoxyde de carbone (CO) et/ou d'hydrocarbures (HCs) et le premier catalyseur de réduction catalytique sélective.

6. Système d'échappement selon la revendication 5, dans lequel le conduit chauffable électriquement fait partie d'un conduit de gaz d'échappement entre une sortie du dispositif de contrôle d'émissions pour l'oxydation de monoxyde de carbone (CO) et/ou d'hydrocarbures (HCs) et une entrée du premier catalyseur de réduction catalytique sélective.

7. Système d'échappement selon l'une quelconque des revendications précédentes, où le dispositif de contrôle d'émissions pour l'oxydation de monoxyde de carbone (CO) et/ou d'hydrocarbures (HCs) peut être choisi dans le groupe constitué par (i) un catalyseur d'oxydation de diesel (DOC), (ii) un filtre à suie catalysée (CSF), (iii) un catalyseur de concept de démarrage à froid ; (iv) un catalyseur d'oxydation de diesel (DOC) et un filtre à suie catalysée (CSF) ; et (v) un catalyseur de concept de démarrage à froid et un filtre à suie catalysée (CSF).

8. Système d'échappement selon l'une quelconque des revendications précédentes, dans lequel (b) l'injecteur est un injecteur de liquide pour l'introduction d'une solution comprenant un précurseur d'ammoniac dans le gaz d'échappement.

9. Système d'échappement selon l'une quelconque des revendications précédentes, dans lequel la seconde composition de réduction catalytique sélective comprend une formulation de catalyseur SCR à base d'oxyde de métal, une formulation de catalyseur SCR à base de tamis moléculaire ou un mélange de celles-ci.

10. Système d'échappement selon l'une quelconque des revendications précédentes, dans lequel le (d) catalyseur de réduction catalytique sélective (SCR) a un substrat à flux continu, qui est un monolithe à flux continu, dans lequel le monolithe à flux continu non revêtu a une porosité de 45 à 60 %.

11. Système d'échappement selon l'une quelconque des revendications précédentes, dans lequel la première composition de réduction catalytique sélective comprend une formulation de catalyseur SCR à base d'oxyde de métal, une formulation de catalyseur SCR à base de tamis moléculaire ou un mélange de celles-ci.
